# NEUE EUROPÄISCHE PATENTSCHRIFT

(11) **EP 0 286 804 B2**
(45) Veröffentlichungstag und Bekanntmachung des Hinweises auf die Entscheidung über den Einspruch: **11.12.1996**
(45) Hinweis auf die Patenterteilung: 06.03.1991
(21) Anmeldenummer: 88102655.3
(22) Anmeldetag: 24.02.1988
(51) Int. Cl.: G02B 6/44, H01B 5/10, H01B 11/22

(54) **Elektrisches Freileiterseil mit integrierten Lichtwellenleitern**
Electrical overhead conductor with integrated light wave guides
Câbles pour lignes électriques aériennes avec des guides d'ondes lumineuses intégrés

(30) Priorität: 14.04.1987 DE 8705548 U
(43) Veröffentlichungstag der Anmeldung: 19.10.1988
(73) Patentinhaber: Felten & Guilleaume Energietechnik AG, D-51058 Köln (DE)
(72) Erfinder: Levacher, Friedrich Karl, Dr., D-5024 Brauweiler (DE); Bausch, Joachim, Dr. Ing., D-5253 Lindlar (DE); Harjes, Bernd, Dr. Ing., D-5060 Bergisch-Gladbach 2 (DE)

(56) Entgegenhaltungen:
- EP-A- 0 050 495
- EP-A- 0 099 745
- EP-A- 0 129 438
- EP-A- 0 221 243
- EP-A- 0 550 495
- EP-B- 0 390 810
- DE-A- 2 934 684
- DE-A- 3 446 766
- DE-A- 3 538 664
- DE-C- 2 604 766
- GB-A- 1 598 540
- JP-A- 5 324 582
- JP-A- 6 153 707
- DIN 482040 April 1984 Teil 5

## Beschreibung

Die Erfindung betrifft ein elektrisches Freileiterseil mit integrierten Lichtwellenleitern (LWL) nach dem Oberbegriff des Anspruchs 1.

Es ist bekannt, Lichtwellenleiter (optische Fasern) zum Zweck der optischen Nachrichtenübertragung in den Kern von Freileiterseilen (Phasen- oder Erdseilen) einzulegen, siehe beispielsweise im Aufsatz von R. Herff in Z. etz 106 (1985) 162-66. Damit sie dort nicht der vollen Seildehnung unterliegen, sind sie im Verband miteinander und/oder mit Beilaufelementen verseilt. Darüber liegt dann ein verhältnismäßig dicker Schutzmantel, und diesen umgeben die Drähte des Phasen- oder Erdseils. Bedingt durch den Platzbedarf für die Nachrichtenelemente im Kern, wird das Seil dicker und schwerer als ein vergleichbares Seil gleichen Längswiderstandes.

Es ist auch bekannt, Lichtwellenleiter statt im Kern eines Freileiterseils in einer weiter außen befindlichen Drahtlage anzuordnen. So ist in GB-A-1 598 540 ein elektro-optisches Freileiterseil beschrieben, bei dem der Kern aus einem Kerndraht und mindestens einer Drahtlage, beide aus Stahl oder aus einer Aluminiumlegierung mit einer höheren Zugfestigkeit als Aluminium, aufgebaut ist. Darüber ist mindestens eine Lage von Drähten aus Aluminium oder einer Aluminiumlegierung aufgebracht Die Kerndrähte dienen vorwiegend der Zugfestigkeit, die Außendrähte vorwiegend der elektrischen Leitung. Als Beispiel ist ein Freileiterseil aus Drähten gleichen Durchmessers (3 mm) gezeigt, bei dem der Kern aus 1+6 Stahldrähten besteht, worüber 3 Lagen Aluminiumdrähte angeordnet sind. Wesentlich ist nun, daß in einer, vorzugsweise inneren, Lage der vorwiegend elektrisch leitenden Drähte mindestens einer dieser Drähte durch ein LWL-Element ersetzt ist, das aus einer rohrförmigen Kunststoffhülle besteht, in der mindestens eine polyurethan-beschichtete optische Faser lose untergebracht ist (LWL-Röhrchen). Das Röhrchen kann aus Nylon oder aus einem faserverstärkten Kunststoff sein. Der äußere Durchmesser des Röhrchens ist gleich oder etwas kleiner als der Durchmesser der Drähte. Zwar wird bei dieser Konstruktion das Seil nicht dicker und schwerer als ein vergleichbares Seil gleichen Längswiderstandes, aber das LWL-Element ist in mechanischer und elektrischer Hinsicht noch nicht optimal ausgebildet und im Seil angeordnet.

Seit einiger Zeit sind Lichtwellenleiter in Monomode- und Multimode-Ausführung im handel, die zu mehreren zum Bündel verseilt von einem nach außen geschlossenen Edelstahlröhrchen als einem druckfesten Schutzmantel umgeben sind.

Der Erfindung liegt die Aufgabe zugrunde, bei einem elektro-optischen Freileiterseil der in der GB-A-1 598 540 beschriebenen Art, die thermische und die mechanische Festigkeit des LWL-Röhrchens zu verbessern.

Diese Aufgabe wird erfindungsgemäß dadurch gelöst, daß die Drähte der inneren Drahtlage. in die das LWL-Röhrchen eingeseilt wird, eine geringere elektrische Leitfähigkeit als die Drähte der äußeren Drahtlage oder -lagen haben, wobei das LWL-Röhrchen aus Edelstahl oder Kunststoff ist, und es je nach den Erfordernissen einen Außendurchesser zwischen 1 und 5 mm, und eine diesbezügliche Wanddicke zwischen 0,15 und 0,4 mm bei Edelstahl oder zwischen 0,3 und 0,8 mm bei Kunststoff hat.

Durch diese Anordnung des LWL-Röhrchens im Seil entsteht im Kurzschlußfall oder bei einem Blitzeinschlag im Kern und in der Verseillage mit dem LWL-Röhrchen eine geringere Wärmeentwicklung als darüber, was sich vorteilhaft auf die Primärbeschichtung der LWL und eine Röhrchenfüllung auswirkt.

Die mit der Erfindung erzielten Vorteile bestehen nicht nur in der verbesserten thermischen Festigkeit des LWL-Röhrchens, sondern auch in seiner verbesserten mechanischen Festigkeit. Die radiale Belastbarkeit des LWL-Röhrchens bei den hauptsächlich erforderlichen Durchmessern zwischen 2 und 4,5 mm reicht aus, um die beim Verseilen mit den anderen Drähten und die im Betrieb des Freileiterseils auf das Röhrchen einwirkenden mechanischen Kräfte (vorwiegend Druck, Zug und Torsion) ohne Beschädigung aufzunehmen.

Und im gleichen Sinn wirkt sich vorteilhaft aus, wenn nach der weiteren Erfindung der Außendurchmesser des LWL-Röhrchens etwa 5% kleiner als der Durchmesser der Drähte seiner Verseillage ist. Hierdurch wird die Radialbelastung des LWL-Röhrchens durch die darüberliegende, mit entgegengesetzter Schlagrichtung aufgebrachte Verseillage praktisch unterbunden.

Der Einsatz eines Edelstahlröhrchens zu dem vorbeschriebenen Zweck ist die technisch beste und eleganteste Lösung, allerdings ist sie nicht gerade preisgünstig. Eine Verbilligung wird nach der weiteren Erfindung dadurch erreicht, daß stattdessen ein Kunststoffröhrchen eingesetzt wird, das mit einer nichtkomprimierbaren, pastenartigen Substanz gefüllt ist, die das Röhrchen mechanisch verstärkt und gegen längslaufendes Wasser abdichtet. Vorzugsweise besteht das Kunststoffröhrchen wie bekannt aus einem Polyamid oder einem faserverstärkten Kunststoff, und seine Füllung besteht aus einem zähflüssigen hydrauliköl.

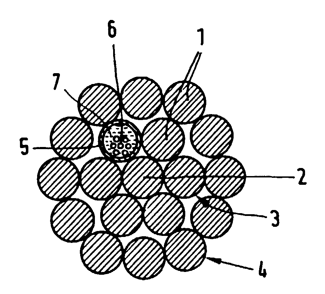

Ein Ausführungsbeispiel der Erfindung ist in der Zeichnung dargestellt und wird im folgenden näher beschrieben. Die Figur zeigt im Querschnitt ein zweilagiges Freileiterseil mit einem in der ersten Verseillage eingeseilten LWL-Röhrchen.

Bezeichnet sind mit
1 Drähte des Seils, durchmessergleich
2 Kerndraht aus Stahl
3 Erste und innere Drahtlage (Verseillage) aus 5 Stahldrähten und dem LWL-Röhrchen
4 Zweite und äußere Drahtlage (Verseillage) aus 12 Drähten aus Aluminium oder einer Aluminiumlegierung, mit zur ersten Lage entgegengesetzter Schlagrichtung
5 LWL-Röhrchen aus Edelstahl oder Kunststoff, knapp durchmessergleich mit den Drähten
6 LWL-Bündel
7 Röhrchenfüllung mit einer pastenartigen Substanz, nichtkomprimierbar im Fall eines LWL-Röhrchens aus Kunststoff

Die Figur verdeutlicht nochmals die Erfindung: Bei Freileiterseilen (Phasen- oder Erdseilen) mit durchmessergleichen Drähten und mehrlagigem Aufbau die mit LWL kombiniert werden sollen, ist es vorteilhaft, einen der Drähte 1 des Seils durch das knapp durchmessergleiche Rörchen 5 zu ersetzen, das die für die Nachrichtenübertragung erforderliche Zahl von LWL als LWL-Bündel 6 enthält. Zur Verbesserung der thermischen und der mechanischen Festigkeit des LWL-Röhrchens ist es wesentlich, daß es in die innere Drahflage 3 eingeseilt ist, deren Drähte eine geringere elektrische Leitfähigkeit als die Drähte der äußeren Drahtlage 4 haben.

Dieser Aufbau gewährleistet, daß zum einen im Kurzschlußfall oder bei einem Blitzeinschlag im Kern 2 und in der Verseillage 3 mit dem LWL-Röhrchen eine geringere Wärmeentwicklung als darüber entsteht, und daß zum anderen Radialkräfte von Befestigungsarmaturen das LWL-Röhrchen 5 nicht flachdrücken und die LWL 6 schädigen, da die darüber befindliche Drahtlage 4 infolge der Gewölbewirkung und der entgegengesetzten Schlagrichtung die Radialkräfte abfängt. Die Anordnung des LWL-Röhrchens in der inneren Verseillage 3 hat ferner den Vorteil, daß die Seildehnung nicht voll wirksam werden kann.

Da das LWL-Röhrchen nicht die Leit- und Tragfähigkeit des ersetzten Einzeldrahtes übernehmen kann, müssen diese Eigenschaften von den übrigen Drähten übernommen werden. Dies ist jedoch ohne nennenswerten Aufwand möglich.

Da das Edelstahlröhrchen aufgrund seiner Werkstoffeigenschaften das LWL-Bündel gegen mechanische Kräfte (wie Zug, Druck, Biegung und Torsion) sehr gut schützt, muß das an seiner Stelle verwendete, mechanisch weniger gut belastbare Kunststoffröhrchen in dieser Hinsicht ertüchtigt werden. Dies geschieht zum einen durch eine Verdopplung der Wanddicke und weiter durch eine Verstärkung der Wand mittels eines faserverstärkten Kunststoffs, und zum anderen durch die Füllung des Röhrchens mit einer nichtkomprimierbaren Substanz. Auf diese Weise erhält das Kunststoffröhrchen die erforderliche Formstabilität.

Zur Füllung sei angemerkt : Das kreisrunde Röhrchen hat bei vorgegebenem Umfang das größte Volumen. Bei einer Verformung zur Ellipse wird das Verhältnis Querschnitt/Volumen kleiner. Eine Füllung mit einer nichtkomprimierbaren Substanz verhindert dies. Allerdings wird nun eine von außen einwirkende Kraft voll auf die Lichtwellenleiter im Röhrchen übertragen. Deshalb müssen sie (die optischen Fasern) eine ganz homogene Primärbeschichtung (aus Kunststoff) haben.

Der einfachste Aufbau eines erfindungsgemäßen elektro-optischen Freileiterseils mit durchmessergleichen Drähten ist, wie in der Figur dargestellt, folgender : Um den Kerndraht 2 aus Stahl ist die erste Lage 3 aus 5 Stahldrähten und dem LWL-Röhrchen 5, und darüber ist die zweite Lage 4 aus 12 Drähten aus Aluminium oder einer Aluminiumlegierung geseilt.

## Patentansprüche

1. Elektrisches Freileiterseil mit integrierten Lichtwellenleitern (LWL) und
mit durchmessergleichen Drähten (1) bestehend, aus einem Kerndraht (2) aus Stahl, darüber mindestens zwei Drahtlagen (3,4), deren innerste (3) aus Stahldrähten besteht, und aus mindestens einer Lage (4) aus Drähten aus Aluminium oder einer Aluminiumlegierung, wobei
anstelle eines Drahtes ein Röhrchen (5) in eine innere Drahtlage (3) eingeseilt ist, in das ein Bündel LWL (6) lose eingebracht ist (LWL-Röhrchen), **dadurch gekennzeichnet,**
- daß die Drähte der inneren Drahtlage (3), in die das LWL-Röhrchen (5) eingeseilt ist eine geringere elektrische Leitfähigkeit als die Drähte der äußeren Drahtlage oder -lagen (4) haben,
- wobei das LWL-Röhrchen (5) aus Edelstahl oder Kunststoff ist, und es je nach den Erfordernissen einen Außendurchmesser zwichen 1 und 5 mm, und eine diesbezügliche Wanddicke zwischen 0,15 und 0,4 mm bei Edelstahl oder zwischen 0,3 und 0,8 mm bei Kunststoff hat.

2. Freileiterseil nach Anspruch 1, **dadurch gekennzeichnet,** daß der Außendurchmesser des LWL-Röhrchens (5) etwa 5% kleiner als der Durchmesser der Drähte (1) seiner Verseillage ist.

3. Freileiterseil nach Anspruch 1 oder 2, **dadurch gekennzeichnet,** daß falls das LWL-Röhrchen (5) aus Kunststoff ist, dieses mit einer nichtkomprimierbaren, pastenartigen Substanz (7) gefüllt ist.

4. Freileiterseil nach Anspruch 3, **dadurch gekennzeichnet,** daß das LWL-Röhrchen (5) aus einem Polyamid oder einem faserverstärkten Kunststoff ist, und daß seine Füllung (7) aus einem zähflüssigen Hydrauliköl besteht.

5. Freileiterseil nach einem der Ansprüche 1 bis 4, **dadurch gekennzeichnet,** daß es wie folgt aufgebaut ist : Kern-Stahldraht (2), erste Lage (3) aus 5 Stahldrähten und dem LWL-Röhrchen (5), und darüber mindestens eine Lage (4) aus 12 Drähten aus Aluminium oder einer Aluminiumlegierung.

## Claims

1. Overhead electrical cable with integrated light wave guides (LWG) and with wires (1) of equal diameter, said cable consisting of a core wire (2) made of steel, and thereover at least two layers of wires (3,4), from which the inner most (3) consists of steel wires, and of at least one layer (4) of wires made of aluminium or of an aluminium alloy; instead of a wire a tubule (5), into which there is loosely inserted an LWG bundle (6) (LWG tubule) is stranded into an inner wire layer (3), characterised in that
- the wires of the inner wire layer (3), into which the LWG tubule (5) is stranded, have a lower electrical conductivity than the wires of the outer wire layer or layers (4),
- the LWG tubule (5) being made of refined steel or of synthetic plastics material, and according to requirements, having an external diameter of between 1 and 5 mm and a corresponding wall thickness of between 0.15 and 0.4 mm in the case of refined steel, or of between 0.3 and 0.8 mm in the case of synthetic plastics material.

2. Overhead electrical cable according to claim 1, characterised in that the external diameter of the LWG tubule (5) is approximately 5% smaller than the diameter of the wires (1) of its stranded layer.

3. Overhead electrical cable according to claim 1 or 2, characterised in that if the LWG tubule (5) is made of synthetic plastics material, it is filled with a non-compressible paste-like substance (7).

4. Overhead electrical cable according to claim 3, characterised in that the LWG tubule (5) is made from a polyamide or from a fibre-reinforced synthetic plastics material, and that its filling (7) consists of a viscous hydraulic oil.

5. Overhead electrical cable according to any one of claims 1 to 4, characterised in that it is assembled as follows : steel wire core (2), first layer (3) consisting of 5 steel wires and of the LWG tubule (5), and thereover at least one layer (4) consisting of 12 wires made of aluminium or of an aluminium alloy.

## Revendications

1. Câble pour lignes électriques aériennes avec guides d'ondes lumineuses (LWL) intégrés et avec des fils de même diamètre (1),
constitué par un fil central en acier (2) et par-dessus celui-ci au moins deux couches de fils (3,4), dont la couche la plus interne (3) est constituée par des fils en acier, et dont au moins une autre est une couche (4) de fils d'aluminium ou d'un alliage d'aluminium; un petit tube (5), dans lequel est engagé librement un faisceau LWL (6) (petit tube LWL), étant inséré dans une couche interne de fils (3) à la place d'un fil, caractérisé en ce que:
- les fils de la couche interne (3) dans laquelle est câblé le tube LWL (3) ont une moindre conductivité électrique que les fils de la couche ou des couches (4) de fils extérieurs,
- en ce que le petit tube LWL (5) est en acier spécial ou en matière plastique et a, en fonction des exigences, un diamètre extérieur compris entre 2 et 5 mm et une épaisseur de paroi correspondante comprise entre 0,15 et 0,4 mm pour l'acier spécial ou entre 0,3 et 0,8 mm pour le plastique.

2. Câble pour lignes aériennes selon la revendication 1, caractérisé en ce que le diamètre extérieur du tube LWL (5) est inférieur d'environ 5% au diamètre des fils (1) de sa couche de câblage.

3. Câble pour lignes aériennes selon la revendication 1 ou 2, caractérisé en ce que, si le tube LWL (5) est en plastique, il est rempli d'une substance (7) pâteuse, non comprimable.

4. Câble pour lignes aériennes selon la revendication 3, caractérisé en ce que le tube LWL (5) est en polyamide ou en une matière plastique renforcée de fibres et en ce que son remplissage (7) est constitué par une huile hydraulique visqueuse

5. Câble pour lignes aériennes selon l'une des revendications 1 à 4, caractérisé en ce qu'il est constitué comme suit : un fil central en acier (2), une première couche (3) composée de cinq fils d'acier et du tube LWL (5) et par-dessus au moins une couche (4) composée de douze fils d'aluminium ou d'un alliage d'aluminium.
